(19) Europäisches Patentamt
European Patent Office
Office européen des brevets

(11) **EP 4 703 755 A1**

(12) **EUROPÄISCHE PATENTANMELDUNG**

(43) Veröffentlichungstag:
**04.03.2026   Patentblatt 2026/10**

(21) Anmeldenummer: **25196831.9**

(22) Anmeldetag: **19.08.2025**

(51) Internationale Patentklassifikation (IPC):
**G01S 3/36** (2006.01)       **G01S 3/74** (2006.01)
**H01Q 21/06** (2006.01)      **H01Q 25/00** (2006.01)
**H04B 7/08** (2006.01)       **G01S 7/02** (2006.01)

(52) Gemeinsame Patentklassifikation (CPC):
**H01Q 25/00; G01S 3/74; H01Q 21/061;**
**H04B 7/0842;** G01S 3/36; G01S 3/46; G01S 7/021

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: **30.08.2024   DE 102024124891**

(71) Anmelder: **HENSOLDT Sensors GmbH**
**82024 Taufkirchen (DE)**

(72) Erfinder: **GOTTSCHEBER, Holger**
**82024 Taufkirchen (DE)**

(74) Vertreter: **LifeTech IP**
**Spies & Behrndt Patentanwälte PartG mbB**
**Elsenheimerstraße 47a**
**80687 München (DE)**

(54) **STEUERVORRICHTUNG, ANTENNENARRAY UND VERFAHREN ZUM ANSTEUERN EINES ANTENNENARRAYS**

(57)   Eine Steuervorrichtung (50) für eine digitale Strahlformung eines Antennenarrays (100) ist offenbart. Das Antennenarray (100) umfasst zumindest eine erste Subapertur (110) zum Erzeugen einer Vielzahl von ersten Antennenkegeln (210) und eine zweite Subapertur (120) zum Erzeugen einer Vielzahl von zweiten Antennenkegeln (220). Die Steuervorrichtung ist ausgebildet, um die ersten Antennenkegel (210) und die zweiten Antennenkegel (220) abwechselnd nebeneinander anzuordnen, wobei die erste Subapertur (110) und die zweite Subapertur (120) ausgebildet sind, um verschiedene Abtastfrequenzen zu nutzen und jeweils eine Unterabtastung durchzuführen.

Fig. 1

EP 4 703 755 A1

**Beschreibung**

Die vorliegende Erfindung bezieht sich auf eine Steuervorrichtung für eine digitale Strahlformung eines Antennenarrays, auf ein Antennenarray und auf ein Verfahren zum Ansteuern des Antennenarrays und, insbesondere auf eine digitale Strahlformungsantenne für Radaranlagen für ESM-Anwendungen (ESM, Electronic Support Measure).

HINTERGRUND

Konventionelle Antennenanlagen umfassen drehende Antennen (sogenannte Spinning-Antennen), lineare Interferometer, zirkulare Interferometer (z.B. angeordnet als Kreisgruppen), Sektor-Antennen mit Auswertungen der Amplitudendiagramme. Die zuletzt genannten Antennen sind mechanisch starr und können nur für einen vorbestimmten Zweck genutzt werden. Insbesondere ist es bei diesen Antennenanlagen nicht möglich, diese für andere Zwecke umzuprogrammieren. So kann beispielsweise ein Interferometer nicht zu einer Antenne mit einem hohen Antennengewinn umprogrammiert werden. Ebenso kann eine mechanische Antenne mit einem hohen Antennengewinn wie beispielsweise ein Parabolspiegel oder eine Horn-Antenne nicht zu einer Antenne mit einem großen Sichtfeld umgestaltet werden oder rekonfiguriert werden. Breitbandig strahlende Aperturen können beispielsweise durch verkoppelte Dipole oder strahlende Schlitze (sogenannte "current sheet antennas") erreicht werden.

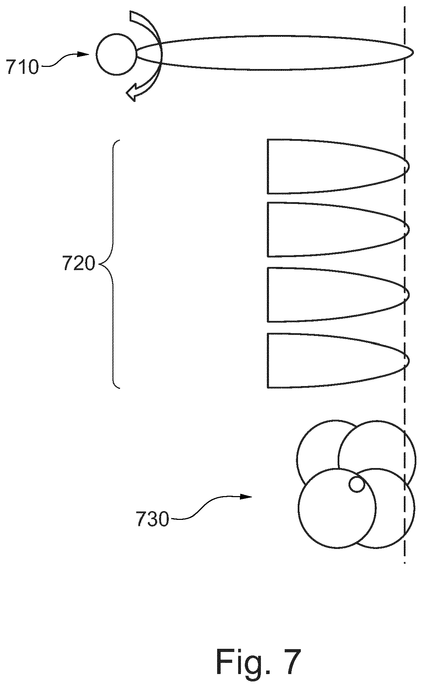

**Fig. 7** zeigt beispielhaft einige konventionelle Antennenanlagen, wobei oben eine sogenannte Drehantenne 710 gezeigt ist, die eine fokussierte, drehbare Radarkeule (Antennenkegel) in ihrer Antennencharakteristik aufweist. Ein Vorteil dieser konventionellen Antenne besteht in ihrer Breitbandigkeit, wobei das Verhältnis zwischen maximaler und minimaler Frequenz beispielsweise größer als 8:1 gewählt werden kann. Bei einer beispielhaften Maximalfrequenz von 4 GHz und bei einer minimalen Frequenz von 0,5 GHz ist ein Faktor von 8 somit erreichbar. Darunter ist ein konventionelles Interferometer 720 gezeigt, das typischerweise mit Spiral-Antennen realisiert wird. Das Interferometer 720 hat eine geringe Richtwirkung. Weitere konventionelle Antennen-Anordnungen mit Spiral-Antennen sind sogenannte Vier-Quadranten-Monopuls-Gruppe 730, die gewählt wird, wenn eine vollständige räumliche Abdeckung erreicht werden soll.

Bei konventionellen Antennenanlagen müssen somit immer Zugeständnisse gemacht oder ein Kompromiss gefunden werden (z.B. zwischen empfindlich oder großer Raumabdeckung). Die jeweilig genutzte Hardware legt fest, welcher Aspekt sichergestellt wird und welcher nicht. Diese Situation ist nicht zufriedenstellend.

Daher besteht ein Bedarf nach Antennenanlagen, die das Paradigma auflösen und situativ/ flexibel an die Bedürfnisse angepasst werden können.

KURZBESCHREIBUNG DER ERFINDUNG

Zumindest ein Teil der obengenannten Probleme wird durch eine Steuervorrichtung nach Anspruch 1 und ein Verfahren zum Steuern eines Antennenarrays nach Anspruch 12 gelöst. Die abhängigen Ansprüche beziehen sich auf vorteilhafte Weiterbildungen der Gegenstände der unabhängigen Ansprüche.

Die vorliegende Erfindung bezieht sich auf eine Steuervorrichtung für eine digitale Strahlformung eines Antennenarrays. Das Antennenarray umfasst zumindest eine erste Subapertur zum Erzeugen einer Vielzahl von ersten Antennenkegeln und eine zweite Subapertur zum Erzeugen einer Vielzahl von zweiten Antennenkegeln. Die Steuervorrichtung ist ausgebildet, um die ersten Antennenkegel und die zweiten Antennenkegel abwechselnd nebeneinander anzuordnen (z.B. als Fächer), wobei die erste Subapertur und die zweite Subapertur ausgebildet sind, um verschiedene Abtastfrequenzen zu nutzen und jeweils eine Unterabtastung durchzuführen. Dieser Betriebsmodus wird im Rahmen der vorliegenden Offenbarung auch als erster Modus, M1, bezeichnet.

Im Rahmen der vorliegenden Offenbarung wird ein Antennenkegel als eine Hauptkeule der Antenne verstanden. Die Strahlformung legt die Form und die Richtung der Antennenkegel fest, wobei eine digitale Strahlformung es ermöglicht, dass für jede Subapertur mehrere Antennenkegel gebildet werden (im Gegensatz zur analogen Strahlformung), die selektiv angepasst und auch geschwenkt werden können.

Die Unterabtastung bedeutet, dass die Frequenzen der Empfangssignale nicht alle in der ersten Nyquist-Zone liegen, sondern über mehrere NYZ verteilt sind. Dies ist gleichbedeutend zur Nutzung einer zu geringen Abtastfrequenz, um das Spektrum der Empfangssignale eindeutig zu ermitteln.

Eine Subapertur kann beispielsweise dadurch definiert sein, dass sie eine Vielzahl von Antennenelementen (sogenannten Strahler) umfasst, die miteinander zusammen angesteuert werden können, um eine oder mehrere Antennenkegel (Strahlen oder Beams) zu erzeugen. Die Antennenelemente sind typischerweise alle in einen vorbestimmten Abstand voneinander angeordnet, der so gewählt werden kann, dass Neben- oder Seitenkeulen in der Antennencharakteristik unterdrückt werden. Die Vielzahl der Antennenelemente des Antennenarrays können gemäß Ausführungsbeispielen flexibel in Subaperturen aufgeteilt werden.

Optional erstreckt sich die Unterabtastung auf drei Nyquist-Zonen und die Steuervorrichtung ist ausgebildet, um abgetastete Empfangssignale basierend auf einer Frequenzdifferenz von Abtastwerten für ein Empfangssignal, welches mit den verschiedenen Abtastfrequenzen abgetastet wurde, eindeutig den drei Nyquist-Zonen zu zuordnen und für jedes abgetastete Empfangssignal eine Vielzahl von Antennenkegel, die zu den drei Nyquist-Zonen gehören, zu berechnen.

Hiermit wird die Mehrdeutigkeit (Aliasing) von Abtastwerten, die durch eine Überfaltung von Signalen von höheren Nyquist-Zonen zu niedrigen Nyquist-Zonen entsteht, aufgelöst. Die Unterabtastung führt somit nicht zu einem Verlust an Information bzw. an Eindeutigkeit.

Optional ist die Steuervorrichtung weiter ausgebildet ist, um die ersten Antennenkegel und die zweiten Antennenkegel nebeneinander anzuordnen (abwechselnd oder nacheinander), wobei in der ersten Subapertur und in der zweiten Subapertur jeweils eine Überabtastung durchgeführt wird. Aufgrund der Überabtastung liegen alle Abtastwerte in der ersten Nyquist-Zone und es tritt kein Aliasing (Mehrdeutigkeit) auf. Dieser Betriebsmodus wird im Rahmen der vorliegenden Offenbarung auch als zweiter Modus, M2, bezeichnet.

Optional ist die Steuervorrichtung weiter ausgebildet, um die ersten Antennenkegel und die zweiten Antennenkegel zu überlappen. Es versteht sich, dass überlappende Antennenkegel in eine gleiche Richtung ausgerichtet sind (z.B. auf eine Position in einem Beobachtungsgebiet). Insbesondere können alle Antennenkegel von einer Subapertur oder von mehreren Subapertur oder von allen Subaperturen überlappen, um eine hohe Strahlbündelung zu erreichen. Diese Betriebsmodus wird im Rahmen der vorliegenden Offenbarung auch als dritter Modus, M3, bezeichnet.

Wenn zumindest einige Antennenkegel eine gleiche Blickrichtung, kann optional eine kohärente Addition von dazugehörigen Antennensignale (z.B. Empfangssignale) erfolgen.

Optional umfasst das Antennenarray eine Vielzahl von Subaperturen, die entlang von Zeilen und/oder Spalten angeordnet sind, wobei die erste Subapertur und die zweite Subapertur benachbart entlang einer Zeile oder einer Spalte angeordnet sein können.

Gemäß weiteren Ausführungsbeispielen können die definierten Modi beliebige gemischt werden (in Azimut und/oder in Elevation). Zum Beispiel können vier Subaperturen in zwei Zeilen vorhanden sein, wobei je zwei Subaperturen in jeder Zeile ausgebildet sind. Dementsprechend kann die Steuervorrichtung ausgebildet sein, um die Subaperturen in den Zeilen (oder Spalten) wie folgt zu betreiben:

- jeweils im ersten Modus,
- jeweils im zweiten Modus,
- jeweils im dritten Modus,
- eine Zeile im ersten Modus (oder dritten Modus) und die andere Zeile im zweiten Modus (oder dritten Modus),
- eine andere beliebige Kombination der Modi.

Insbesondere können optional alle Antennenkegel aller Subaperturen überlappen. Optional können auch alle Antennenkegel in zumindest einer Zeile oder zumindest einer Spalte nebeneinander angeordnet sein, um mehrere übereinanderliegende Fächer zu bilden.

Optional ist die Steuervorrichtung weiter ausgebildet, um eine Peilung basierend auf zumindest einem der folgenden Verfahren durchzuführen:

- ein Phasenmonopulsverfahren,
- ein Amplituden-Monopulsverfahren (z.B. mit Antennengewinn),
- eine Interferometrie (z.B. in Elevation),
- ein 4-Quadranten-Monopulsverfahren (bei fokussiertem Array).

Für einen Fachmann ist klar, dass beim Amplitudenmonopulsverfahren Amplitudenwerte eines Pulses (z.B. von einem Sender oder Emitter im Beobachtungsgebiet) von verschiedenen Subaperturen verglichen werden. Wenn die Antennenkegel der Subaperturen in verschiedene Richtungen ausgerichtet sind, unterscheiden sich die Amplitudenwerte von ein und derselben Quelle aufgrund der Antennencharakteristik beträchtlich. Daher sind z.B. benachbarte Subaperturen einer Fächeranordnung (zweiter Modus) für eine Peilung in Richtung der Auffächerung besonders gut geeignet.

Für einen Fachmann ist auch klar, dass beim Phasenmonopulsverfahren Phasenlagen eines Pulses (z.B. von einem Sender oder Emitter im Beobachtungsgebiet) von verschiedenen Subaperturen verglichen werden. Wenn die Antennenkegel von Subaperturen in eine gleiche Richtung ausgerichtet sind, unterscheiden sich die Amplitudenwerte nicht oder kaum. Dafür ändert sich aber die Phasenlage aufgrund der unterschiedlichen Entfernung der beabstandeten Subarturen zu dem Sender deutlich. Daher sind beabstandete Subaperturen mit überlappenden Antennenkeulen (erster Modus oder dritter Modus) für eine Peilung in Richtung der Beabstandung besonders gut geeignet.

Die genannten Peilverfahren können auch gemischt werden. Eine Peilung kann auch durch ein Schwenken vorgenommen werden. Ein großer Vorteil der digitalen Strahlformung besteht aber darin, dass ein großes Gebiet parallel erfasst werden kann, um dann eine Peilung mittels Monopulsverfahren durchzuführen. Ebenso können die Größen der Antennenkegel (z.B. der Öffnungswinkel) an die Abdeckung angepasst werden.

Optional kann die Steuervorrichtung mit jeder Subapertur jeweils einen Antennenkegel konstant auf jeweils ein Beobachtungsobjekt richten bzw. dessen Bewegung über ein Schwenken nachverfolgen.

Gemäß Ausführungsbeispielen ist das Antennenarray in einem Frequenzbereich von 350 MHz bis 6 GHz betreibbar. Die verschiedenen Abtastfrequenzen können eine Differenz im Bereich von 150 MHz bis 300 MHz aufweisen. Die genutzten Abtastfrequenzen können ein Vielfaches eines Taktsignal (z.B. von 125 MHz) sein.

Ausführungsbeispiele beziehen sich auch auf ein Antennenarray mit digitaler Strahlformung, welches mehrere benachbarte Subaperturen aufweist, die jeweils eine Vielzahl von Antennenelementen umfassen. Jede Subapertur ist wieder ausgebildet, eine Vielzahl von Antennenkegeln zu erzeugen. Außerdem kann das Antennenarray eine Steuervorrichtung aufweisen, wie sie zuvor beschrieben wurde.

Optional sind alle benachbarten Antennenelemente in einem vorbestimmten Abstand voneinander angeordnet. Auch zwischen Antennenelementen von benachbarten Subaperturen kann der vorbestimmte Abstand bestehen (z.B. 25 mm, bei 6 Ghz und eine Wellenlänge von 5 cm).

Ausführungsbeispiele beziehen sich auch auf ein Verfahren zum Ansteuern eines Antennenarrays wie es zuvor beschrieben wurde. Das Verfahren umfasst:

- Anordnen (oder Ausbilden) der ersten Antennenkegel und der zweiten Antennenkegel abwechselnd nebeneinander (bilden z.B. einen Fächer); und
- Abtasten von Empfangssignalen mit verschiedene Abtastfrequenzen in der ersten Subapertur und in der zweite Subapertur, wobei jeweils eine Unterabtastung durchgeführt wird.

Optional umfasst das Verfahren außerdem ein Auswählen eines der folgenden Modi durch ein dementsprechendes Ansteuern des Antennenarrays:

einen ersten Modus, wie er zuvor beschrieben wurde (die ersten Antennenkegel und die zweiten Antennenkegel sind abwechselnd nebeneinander angeordnet und es erfolgt eine Unterabtastung),

einen zweiten Modus, wo die ersten Antennenkegel und die zweiten Antennenkegel nebeneinander angeordnet werden (abwechselnd oder nacheinander, um einen Fächer zu bilden), wobei die erste Subapertur und die zweite Subapertur jeweils eine Überabtastung durchführen,

einen dritten Modus, wo zumindest einiger der ersten Antennenkegel und der zweiten Antennenkegel überlappend angeordnet werden (Strahlbündelung durch ein Übereinanderliegen).

Es versteht sich, dass die Modi zu verschiedenen Zeitpunkten ausgewählt werden können (früher oder später als die Unterabtastung im ersten Modus).

Dieses Verfahren oder zumindest Teile davon kann/können ebenfalls in Form von Anweisungen in Software oder auf einem Computerprogrammprodukt (z.B. ein Speichermedium) implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn die Anweisungen durch eine Verarbeitungseinheit ausgeführt werden. Die Verarbeitungseinheit kann jede Form von Computer oder Steuereinheit sein, die einen entsprechenden Mikroprozessor/programmierbare Logik aufweist, der einen Software/Firmware-Code ausführen kann.

Ausführungsbeispiele überwinden die Probleme von konventionellen Antennenanlagen durch eine flexible Ansteuerung phasengesteuerter Antennen (phased arrays) oder zeitgesteuerter Antennen (timed arrays) zur Aufklärung und zur Peilung von Signalquellen. Bei den Signalquellen handelt es sich beispielsweise um zivile oder militärisch-genutzte Objekte (z.B. ein Flugobjekt, ein Fahrtzeug, eine Bodenstation, eine Mobilfunkantenne), die elektro-magnetische Signale in unterschiedlichen Frequenzen aussenden und deren Position im Rahmen einer Aufklärung festgestellt werden soll.

Vorteile von Ausführungsbeispielen bestehen darin, dass das Steuervorrichtung und somit das Antennenarray flexibel an den Verwendungszweck angepasst werden kann, wobei insbesondere zwischen den folgenden Modi umgeschaltet werden kann:

- hohe Raumabdeckung,
- hohe Strahlbündelung,
- Elevationsbestimmung.

Ausführungsbeispiele mit einer hohen Raumabdeckung (im Azimut oder in der Elevation) nutzen eine Anordnung der Strahlrichtungen zu einem Fächer. Vorteilhafterweisen nutzen Ausführungsbeispiele hierfür mehrere sogenannte Nyquist-Zonen unter Ausnutzung der Überfaltung der analog-digital-Wandler (ADC). Die damit verbundene Unterabtastung führt zu einer hohen instantanen Bandbreite. Die Mehrdeutigkeit durch die Überfaltung bei der Nutzung von mehreren Nyquist-Zonen wird durch die Verwendung von mehreren Abtastraten aufgelöst. Beispielsweise können in einem Fächerbeam benachbarte Strahlrichtungen mit verschiedene Abtastraten abgetastet werden. Peilwerte können durch ein Auswerten von Amplitudenverhältnissen (Amplitude 1/Amplitude 2) für zwei benachbarte oder zwei verschiedene Radarkegel ermittelt werden.

Ausführungsbeispiele erreichen andererseits eine hohe Strahlbündelung und somit einen hohen Antennengewinn beispielsweise durch eine Summation der Antennensignalbeiträge der Subaperturen in einer Raumrichtung. Hierbei können beispielsweise identische Abtastraten auf den Subaperturen genutzt werden. Für diesen Modus können Peilwerte durch eine Auswertung im Vier-Quadranten-Monopulsverfahren gebildet werden, wobei Differenzsignale und Summensignale verwendet werden können.

Zur Elevationsbestimmung können Ausführungsbeispiele ein paarweises Anordnen der Strahlrichtungen der Subaperturen zu einem zweizeiligen Fächerbeam nutzen. Die Abtastraten der gepaarten Strahlen können gleich sein und von benachbarten Blickrichtungen verschieden gewählt werden. So können Empfangssignale aus verschiedenen Blickrichtungen mit verschiedenen Abtastraten abgetastet werden.

Vorteilhafterweise sind Ausführungsbeispiele auch auf Situationen anwendbar, wo jede Subapertur für das Beobachten einer entsprechenden Signalquelle genutzt wird. So können beispielhaft vier Subaperturen dazu verwendet werden, vier Strahlrichtungen auszubilden, um dauerhaft vier Signalquellen zu beobachten.

Ein weiterer Vorteil von Ausführungsbeispielen besteht darin, dass eine beliebige Mischung der verschiedenen Modi möglich wird. So können beispielsweise zwei Subaperturen in einer ersten Zeile in einem ersten Modus und die beiden darunterliegenden Subaperturen in einer zweiten Zeile in einem anderen Modus betrieben werden. Gleiches trifft zu für die Subaperturen, die in einer Zeile nebeneinander angeordnet sind.

Ein weiterer Vorteil von Ausführungsbeispielen besteht darin, dass die Unterabtastung eine hohe Bandbreite mit einem geringen Prozessorressourcenverbrauch kombiniert und so die Strahlformung mit einer FFT (Fast Fourier Transform) möglich ist.

Vorteilhafterweise erlauben Ausführungsbeispiele die Verwendung von Echtzeitverzögerungselementen, die bei der digitalen Strahlformung beispielsweise als fraktionale endliche Impulsfilter FIR (Finite Impulse Response) umgesetzt werden können.

KURZBESCHREIBUNG DER FIGUREN

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1 zeigt ein Antennenarray mit digitaler Strahlformung gemäß Ausführungsbeispielen der vorliegenden Erfindung.

Fig. 2 veranschaulicht weitere Details des Antennenarray, wie es gemäß Ausführungsbeispiele genutzt werden kann.

Fig. 3 veranschaulicht für die Steuervorrichtung mögliche Betriebsmodi gemäß Ausführungsbeispielen.

Fig. 4 veranschaulicht eine Auflösung der Mehrdeutigkeit gemäß Ausführungsbeispielen.

Fig. 5 zeigt beispielhaft eine Raumansicht auf das Antennenarray.

Fig. 6 zeigt ein schematisches Flussdiagramm für ein Verfahren zum Ansteuern des Antennenarrays gemäß Ausführungsbeispielen.

DETAILLIERTE BESCHREIBUNG

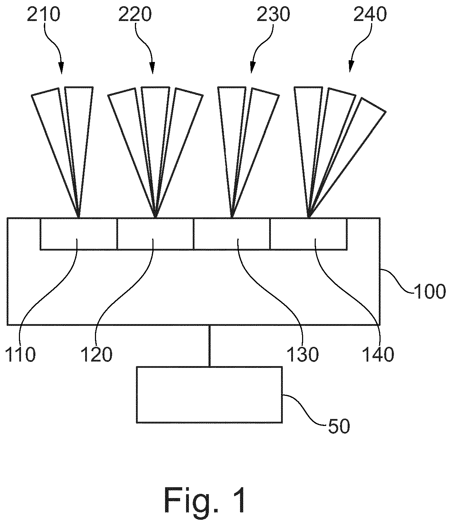

**Fig. 1** zeigt ein Antennenarray 100 mit digitaler Strahlformung, welches gemäß Ausführungsbeispielen durch eine Steuervorrichtung 50 in verschiedenen Betriebsmodi angesteuert wird. Das Antennenarray 100 umfasst mehrere benachbarte Subaperturen 110, 120, 130, 140 mit jeweils einer Vielzahl von Antennenelementen (nicht zu sehen). Jede Subapertur 110, 120, 130, 140 ist ausgebildet, um jeweils mehrere Antennenkegel 210, 220, 230, 240 zu erzeugen. Die Steuervorrichtung 50 steuert die digitale Strahlformung des Antennenarrays 100 durch ein Aktivieren von einen oder mehreren Modi, die weiter unten im Detail beschrieben werden.

Die Antennenkegel 210, 220, ... sind die Hauptkeulen der Antennencharakteristik, die durch die Subaperturen 110, 120, ... mit ihrer Vielzahl von Antennenelementen erzeugt werden. Das gezeigte Antennenarray 100 hat beispielhaft vier Subaperturen 110, 120, 130, 140, von denen beliebige zwei Subaperturen in einem beliebigen Modus betrieben werden können, während die verbleibenden zwei in einem anderen Modus betrieben werden können. Es versteht sich, dass das Antennenarray 100 auch durch mehr als vier Subaperturen 110, ..., 140 oder einen Array (mit Zeilen und Spalten) von Subaperturen gebildet werden kann. Jede Subapertur 110, 120, 130, 140 ist in der Lage, basierend auf einer Ansteuerung durch die Steuervorrichtung 50 die zugehörigen Antennenkegel 210, 220, 230, 240 mit einem gewünschten Öffnungswinkel (Strahlbreite) und in einer gewünschten Anzahl zu erzeugen bzw. zu schwenken (siehe Fig. 1).

Gemäß Ausführungsbeispielen kann die Steuervorrichtung 50 mit dem Antennenarray 100 eine integrale Einheit bilden (z.B. in einem gemeinsamen Gehäuse untergebracht sein). Beispielsweise kann die Steuervorrichtung 50 in Bezug auf die vorderseitigen Antennenkegel 210, 220, ... auf einer rückwärtigen Seite angeordnet sein. Sie kann das Antennenarray 100 aber auch entfernt steuern.

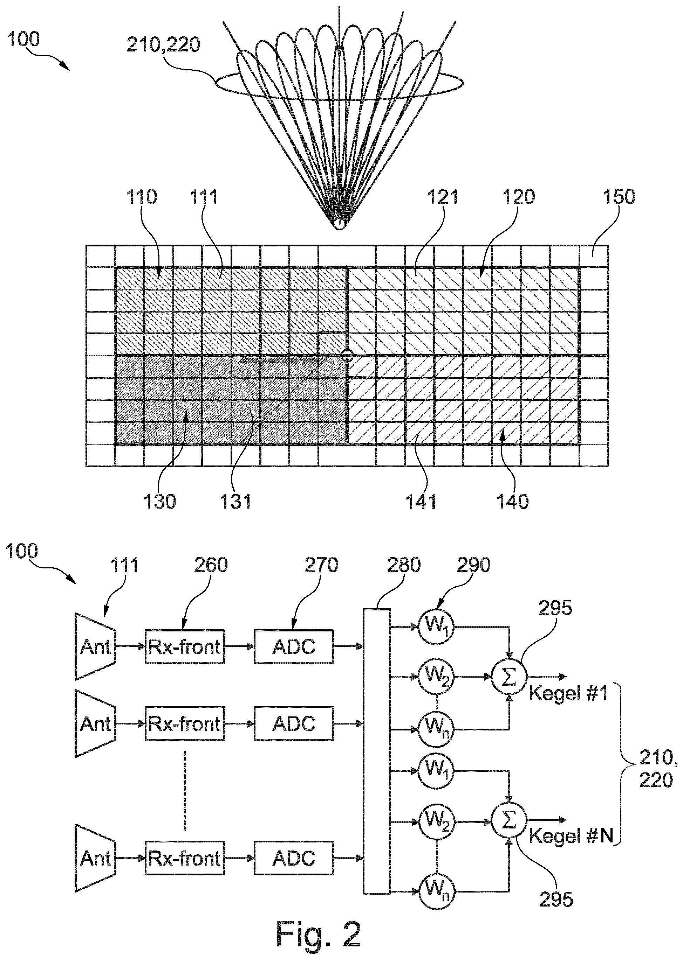

**Fig. 2** veranschaulicht weitere Details des Antennenarray 100, wie es gemäß Ausführungsbeispiele zur Aufklärung von Signalquellen in einem Beobachtungsgebiet genutzt werden kann. Die Signalquellen erzeugen beispielsweise elektro-magnetische Wellen, die durch das Antennenarray 100 empfangen werden können, wobei Ausführungsbeispiele insbesondere für eine breitbandige Aufklärung nutzbar sind, wo ein Frequenzband von beispielsweise mehreren Gigahertz abgedeckt wird.

Wie die **Fig. 2** oben zeigt, umfasst das Antennenarray 100 beispielhaft wieder vier Subaperturen 110, 120, 130, 140, die jeweils eine Vielzahl von Antennenelementen 111, 121, 131, 141 (Strahler) umfassen. Jede Subapertur 110, 120, 130, 140 ist in der Lage, basierend auf einer Ansteuerung durch die Steuervorrichtung 50 mehrere Antennenkegel 210, 220, ... mit einem gewünschten Öffnungswinkel (Strahlbreite) zu erzeugen. Beispielhaft sind nur vier Subaperturen mit einer ersten Subapertur 110, einer zweiten Subapertur 120, einer dritten Subapertur 130 und einer vierten Subapertur 140 in Form von zwei übereinander angeordneten Zeilen gezeigt. Es ist jedoch ebenfalls möglich, dass mehr oder weniger als die gezeigten Subaperturen vorhanden sein können bzw. die Subaperturen ebenfalls in einer Zeile angeordnet werden. Die Ausführungsbeispiele sind auf beliebige Anordnungen von mehreren Subaperturen 110, 120, ... anwendbar.

Die Subaperturen 110, 120, ... selbst bilden ein Array von aktiven Antennenelementen 111, 112, ..., um die herum neutrale Antennenelemente 150 angeordnet sind. Somit hat gemäß Ausführungsbeispielen jedes aktive Antennenelement 111, 112, ... zumindest ein Nachbar-Antennenelement zu jeder Seite. Auf diese Weise verhalten sich die aktiven Antennenelemente 111, 112, ... gleich und die Antennencharakteristik wird verbessert (homogener). Es versteht sich, dass die Anzahl von Antennenelementen 111, 112, ... und die Aufteilung der Subaperturen 110, 120, ... beliebig gewählt werden kann und an die konkreten Bedürfnisse angepasst werden kann. Zum Beispiel kann jede Subapertur 110, 120, ... ein Array von 32 (aktiven) Antennenelementen 111, 112, ... aufweisen, so dass insgesamt 128 (aktive) Antennenelemente 111, 112, ... vorhanden sein können, wobei diese Zahl beliebig änderbar ist.

Da eine digitale Strahlformung genutzt wird, ist jede Subapertur 110, 120, ... in der Lage, eine Vielzahl von Antennenkegeln 210, 220, ... zu erzeugen, die entsprechend den Bedürfnissen in verschiedene Raumrichtungen ausgerichtet und in ihrem Öffnungswinkel angepasst werden können.

**Fig. 2** unten veranschaulicht schematisch eine mögliche Signalerfassung für das Antennenarray 100. Die Antennenelemente 111 empfangen entsprechende Empfangssignale von Signalquellen (entfernte Emitter) und leiten diese Signale an jeweilige Eingangsschaltungen 260 (Rx-front) weiter. Dort kann eine erste Signalaufbereitung (z.B. eine Verstärkung) erfolgen, bevor die analogen Signale anschließend durch jeweilige Analog-Digital-Wandler 270 (ADC) in Digitalsignale umgewandelt, die dann in einem Speicher 280 abgelegt werden können. Die ADC 270 führen zum Beispiel eine Abtastung mit einer oder mit mehreren vorbestimmten Abtastfrequenz durch.

Aus diesem Speicher 280 werden die entsprechenden Digitalsignale ausgelesen und in einer Strahlformungseinheit 290 selektive mit entsprechenden Gewichten W1, W2, ... gewichtet, bevor die gewichteten Digitalsignale aufsummiert werden (in Addierer 295). Durch das gewichtete Addieren werden Linearkombinationen von Eingangssignalen gebildet, was zur Strahlformung führt. Das Resultat sind eine Vielzahl von Strahlen (Radarkegel 210, 220) die entsprechend ausgegeben werden.

In diesem Prozess definieren die Gewichte Wi (i= 1, 2, 3, .. n) die Antennenkegel 210, 220, ... hinsichtlich ihrer Ausrichtung als auch ihrer Breite bzw. Öffnungswinkel. Die Gewichtsfaktoren Wi können entsprechend den Gegebenheiten und Bedürfnissen des Nutzers angepasst werden (z.B. hinsichtlich einer möglichst großen Abdeckung oder einer hohen Fokussierung). Dieses Aufsummieren von gewichteten digitalen Eingangssignalen wird für jeden Strahl durchgeführt und wird durch die Steuervorrichtung 50 gesteuert, zum Beispiele durch eine Auswahl der Antennenelemente 111, Auswahl der Gewichte Wi, Wahl der Abtastfrequenz etc.

Wie bereits dargelegt, besteht ein Vorteil der digitalen Strahlformung darin, dass instantan mehrere Radarkegel 210, 220, ... (Multiple Beams) einen gesamten Sektor erfassen bzw. abdecken können. Außerdem ist es möglich, dedizierte Radarkegel zur dauerhaften Beobachtung von bestimmten Beobachtungsobjekten zu nutzen. Eine Peilung kann bei der digitalen Strahlformung beispielhaft durch die Differenzdiagramme (z.B. unter Nutzung des Amplitudenmonopuls- bzw. Phasenmonopulsverfahrens) durchgeführt werden, wie es ebenfalls von den Vier-Quadranten-Monopulssystemen bekannt ist.

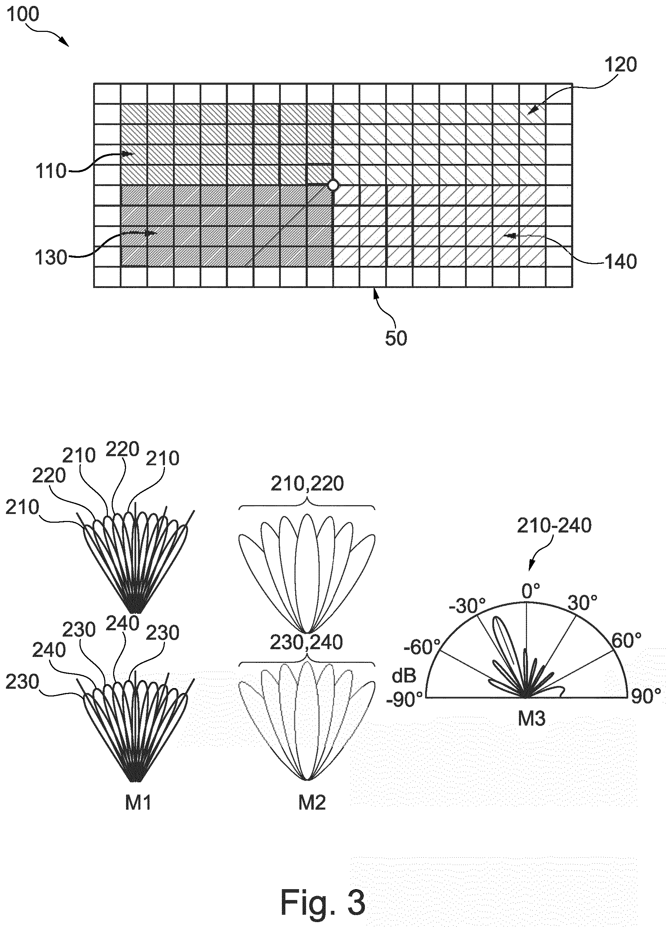

**Fig. 3** veranschaulicht mögliche Betriebsmodi, wie sie gemäß Ausführungsbeispielen durch Steuervorrichtung 50 umgesetzt werden können. Die Steuervorrichtung 50 kann auf einer Rückseite des Antennenarrays 100 angeordnet sein, ist aber in der Fig. 3 nicht dargestellt. Beispielhaft hat das Antennenarray wieder vier Subaperturen 110, 120, 130, 140, welche in zwei Zeilen und zwei Spalten angeordnet sind und durch Randzellen 150 umrandet sind. Wie gezeigt, kann das Antennenarray 100 eine rechteckige Form mit einer langen und einer kurzen Seite aufweisen, wobei der Azimutwinkel beispielsweise in Richtung der langen Seite gemessen werden kann und die Elevation senkrecht dazu (entlang der kurzen Seite). Wie üblich kann der Azimutwinkel sich auf einen Winkelbereich von 360° in der Horizontalen und die Elevation sich auf einen Winkelbereich von 180° für die Vertikale beziehen (in einem üblichen Polarkoordinatensystem).

Jede zwei dieser vier Subaperturen kann in einem der folgenden Modi M1, M2, M3 durch die Steuervorrichtung 50 angesteuert werden, die dazu beispielsweise geeignete Gewichte Wi und/oder geeignete Abtastfrequenzen auswählt.

Erster Modus M1

In dem ersten Modus M1 (links in der Fig. 3 dargestellt) sind die ersten Antennenkegel 210 und die zweiten Antennenkegel 220 abwechselnd nebeneinander anordnen, so dass ein Fächer gebildet wird. Außerdem wird in diesem ersten Modus M1 für die erste Subapertur 110 und für die zweite Subapertur 120 jeweils eine Unterabtastung durchgeführt, wozu verschiedene Abtastfrequenzen genutzt werden. Empfangssignale der ersten Subapertur 110 können mit einer ersten Abtastfrequenz Fs1 und Empfangssignale der zweiten Subapertur 120 können mit einer zweiten Abtastfrequenz Fs2 abgetastet werden, wobei Fs1 ≠ Fs2 gilt. Die Abtastung erfolgt in den ADCs 270 (siehe Fig. 2).

Ein weiterer Fächerbeam durch die dritte Subapertur 130 und durch die vierte Subapertur 140 aufgespannt, wobei die dritten Antennenkegel 230 und die vierte Antennenkegel 240 wieder einander abwechseln. Auch diese beiden Subaperturen 130, 140 können in dem ersten Modus M1 angesteuert werden, sodass für die dritten und vierten Antennenkegel 230, 240 jeweilige Empfangssignale mit jeweils unterschiedlichen Abtastfrequenzen abgetastet werden (in den entsprechenden ADCs 270). Beispielsweise kann die erste Abtastfrequenz F1 für die erste Subapertur 110 und für die dritte Subapertur 130 zur Abtastung genutzt werden. Dementsprechend kann die zweite Subapertur 120 und die vierte Subapertur 140 die zweite Abtastfrequenz Fs2 zur Abtastung der Empfangssignale verwenden, wobei die zweite Abtastfrequenz Fs2 und die erste Abtastfrequenz F1 sich wieder unterscheiden.

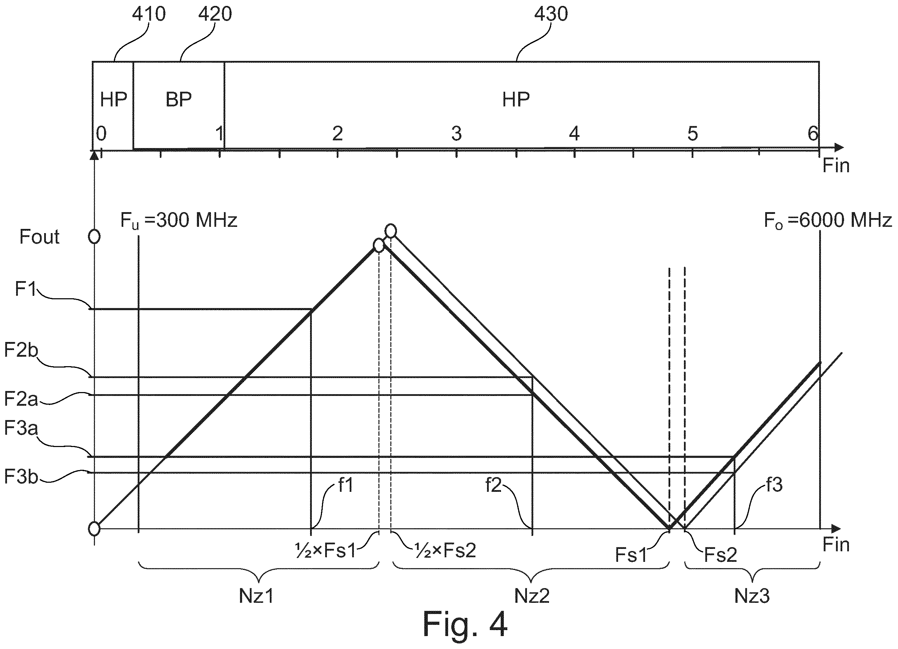

Die Nutzung verschiedene Abtastfrequenzen Fs1, Fs2 ermöglicht es, Mehrdeutigkeiten infolge der Unterabtastung aufzulösen. Dies wird weiter unten mit der Fig. 4 genauer beschrieben.

Die Antennenkegel 230, 240 der dritten Subapertur 130 und der vierten Subapertur 140 sind beispielhaft in die gleiche Richtung ausgerichtet, wie die Antennenkegel 210, 220 der ersten Subapertur 110 und der zweiten Subapertur 120. Die beiden Fächer sind z.B. entlang einer gleichen Linie im Beobachtungsgebiet ausgerichtet. Da die beispielhaft gezeigten zwei Antennenfächer somit einander überlappen, wird in der Elevation kein elektronisches Schwenken durchgeführt. Die Peilung in der Elevation kann aber beispielsweise über eine Phasendifferenz innerhalb des Öffnungswinkels ermittelt werden (z.B. durch Nutzung eines Phasenmonopulsverfahrens). Hierzu wird beispielsweise eine kohärente Auswertung von Empfangssignalen der ersten Subaperturen 110 und der dritten Subapertur 130, als auch der zweiten Subapertur 120 und der vierten Subapertur 140 genutzt, um die entsprechenden Phasendifferenzen zur Peilung zu nutzen.

Zweiter Modus M2

In der **Fig. 3** mittig ist der zweite Modus M2 dargestellt. In dem zweiten Modus M2 wird keine Unterabtastung genutzt, d.h. die Abtastfrequenz wird entsprechend hoch gewählt bzw. die Empfangssignale werden entsprechend gefiltert, sodass die Empfangssignale nur in der ersten Nyquist-Zone liegen. Beispielhaft kann die erste Nyquist-Zone sich in einem Bereich zwischen 0,35 GHz und 1 GHz befinden.

In dem zweiten Modus 2 werden die ersten und zweiten Antennenkegel 210, 220 (der ersten und zweiten Subapertur 110,120) wieder zu einem ersten Fächer 210, 220 aufgefächert, wobei sich wieder Antennenkegel 210, 220 der einzelnen Subaperturen 110, 120 abwechseln können oder nacheinander angeordnet werden oder sich alle überlappen. Gleiches gilt für einen zweiten Fächer 230, 240, der durch die Antennenkegel 230, 240 der dritten Subapertur 130 und der vierten Subapertur 140 erzeugt wird. Der erste Fächer 210, 220 kann oberhalb des zweiten Fächers 230, 240 angeordnet werden. Beide Fächer 210,220 / 230,240 können auch eine gleiche Blickrichtung aufweisen (überlappen). Die einzelnen Empfangssignale der einzelnen überlappenden Antennenkegel können wieder kohärent addiert werden können, sodass eine Peilung in der Elevation über das Phasenmonopulsverfahren möglich ist. Im Azimut kann eine Peilung im Amplitudenmonopulsverfahren durchgeführt werden.

In dem zweiten Modus 2 ist es auch möglich, dass alle Subaperturen 110, 120, 130, 140 gemeinsam nur einen Fächer aufspannen (z.B. entlang des Azimuts). Das bietet den Vorteil, dass nur weniger (z.B. vier) Antennenkegel zur Abdeckung des seitlichen Sichtbereichs erforderlich sind. Im Azimut kann immer noch eine Peilung im Amplitudenmonopulsverfahren durchgeführt werden. In der Elevation kann eine Schwenkung durchgeführt werden.

Dritter Modus M3

In der **Fig. 3** rechts ist der dritte Modus M3 dargestellt, der sich von dem ersten Modus M1 und dem zweiten Modus M2 dadurch unterscheidet, dass für jede Subapertur 110, 120, ... jeweils nur ein Antennenkegel 210-240 ausgebildet wird. Alle Antennenkegel 210, 220, 230, 240 zeigen dann in eine gleiche Richtung. Somit wird eine hohe Strahlbündelung erreicht. Peilungen in allen Richtungen, insbesondere im Azimut und in der Elevation, sind für diesen dritten Modus M3 als Phasenmonopulspeilungen möglich, und zwar gleichzeitig. Dieser dritte Modus M3 erlaubt eine Peilpräzision, die besser als beispielsweise ein Zehntel des Öffnungswinkels des einen Antennenkegels 210-240 ist. Ein weiterer Vorteil des dritten Modus M3 ist ein hoher Signal-Rauschabstand. Aufgrund der starken Bündelung wird allerdings nur eine Blickrichtung abgedeckt.

Es versteht sich, dass die gezeigten Modi M1, M2, M3 beliebig miteinander kombiniert werden können. So kann beispielsweise für die erste Subapertur 110 und die zweite Subapertur 120 der zweite Modus M2 mit einem Fächerbeam genutzt werden, wobei nur die erste Nyquist-Zone genutzt wird. Gleichzeitig oder zeitlich versetzt kann die dritte Subapertur 130 und die vierte Subapertur 140 in dem ersten Modus M1 betrieben werden, wobei mehrere Nyquist-Zonen genutzt werden. Ebenso können die Modi M1, M2, M3 entlang der Zeilen und Spalten unterschiedlich verteilt werden, bzw. in einer Zeile oder einer Spalte mehrere Modi hintereinander genutzt werden.

**Fig. 4** veranschaulicht eine Auflösung der Mehrdeutigkeit bei der Nutzung einer Frequenz-Bandbreite, die sich über mehrere Nyquist-Zonen erstreckt (Unterabtastung), wie sie beispielsweise in dem ersten Modus M1 genutzt wird. Konkret zeigt die **Fig. 4** eine Abhängigkeit der abgetasteten Frequenzwerte Fout (Abtastwerte) von der Frequenz Fin eines Eingangssignals, welches an den Antennenelementen 111, 121, ... empfangen wird. Die Frequenzen Fin der Eingangssignale können beispielhaft in einem Frequenzbereich von 350 MHz bis zu 6 GHz liegen. Somit kann das Antennenarray 100 Signale aus einem Frequenzband von bis zu 6 Ghz oder noch mehr empfangen und auswerten.

In dem ersten Modus 1 werden Empfangssignale mit einer ersten Abtastfrequenz Fs1 und mit einer zweiten Abtastfrequenzen Fs2 abgetastet, die jeweils ein Vielfaches eines Zeitgebersignals sind. Wenn das Zeitgebersignal zum Beispiel 125 kHz beträgt, können als Abtastfrequenzen n*125 MHz (n ist eine natürliche Zahl) eingesetzt werden. Hierzu können Frequenzvervielfacher genutzt werden. Beispielsweise können die erste Abtastfrequenz Fs1 und die zweite Abtastfrequenz Fs2 sich um 250 MHz unterscheiden. Es können aber auch andere Werte genutzt werden.

Wenn die erste Abtastfrequenz Fs1 kleiner ist als die zweite Abtastfrequenzen Fs2, erstreckt sich die erste Nyquist-Zone NZ1 bis zu einer Frequenz von ½*Fs1 (Hälfte der ersten Abtastfrequenz Fs1), die zweite Nyquist-Zone NZ2 erstreckt sich zwischen Fs1/2 bis Fs1 und dritte Nyquist-Zone NZ3 erstreckt sich von Fs1 bis 3/2*Fs1. Strenggenommen sind die Nyquist-Zonen für die zweite Abtastfrequenz Fs2 größer, was aber im Folgenden keine Rolle spielen wird. Ohne Beschränkung der Allgemeinheit kann auch die zweite Abtastfrequenz Fs2 kleiner als die erste Abtastfrequenz Fs1 gewählt werden.

Für jedes Eingangssignal mit einer Frequenz f1 innerhalb der ersten Nyquist-Zone NZ1 liefern beide Abtastungen einen eindeutigen Abtastwert F1 (Abtastung ist eindeutig). Ein Eingangssignal mit einer Frequenz f2 innerhalb der zweiten Nyquist-Zone NZ2 liefert zwei Abtastwerte: F2a für die erste Abtastfrequenz Fs1 und F2b für die zweite Abtastfrequenz Fs2. Die Differenz zwischen beiden Abtastwerte ist

$$\Delta = F2b - F2a > 0 \text{ in NZ2 ,} \qquad (1)$$

(da Fs2>Fs1). Ein Eingangssignal mit einer Frequenz f3 innerhalb der dritten Nyquist-Zone NZ3 liefert auch zwei Abtastwerte: F3a für die erste Abtastfrequenz Fs1 und F3b für die zweite Abtastfrequenz Fs2. Wiederum liefert die Differenz

$$\Delta = F3b - F3a < 0 \text{ in NZ3 ,} \qquad (2)$$

(siehe Fig. 3). Somit ergibt sich die folgende Tabelle:

| Eingangsfrequenz | | Abtastwert für Fs1 | Abtastwert für Fs2 | Differenz |
|---|---|---|---|---|
| NZ1 | f1 | F1 | F1 | $\Delta = 0$ |
| NZ2 | f2 | F2a | F2b | $\Delta > 0$ |
| NZ3 | f3 | F3a | F3b | $\Delta < 0.$ |

**EP 4 703 755 A1**

Wenn mehr als drei Nyquist-Zonen genutzt werden, würde sich dieses Muster entsprechend fortsetzen. Das Vorzeichen von Δ wechselt von Nyquist-Zone zu Nyquist-Zone, allerdings werden die Beträge für Δ immer größer. Daher wäre eine Unterscheidung auch dann noch möglich.

Ausführungsbeispiele sind somit in der Lage Mehrdeutigkeiten aufgrund der Verletzung des Abtasttheorems aufzulösen. Wenn nur eine Frequenz als Abtastsignal auftritt, d.h. Δ = 0, handelt es ich um ein Empfangssignal in der ersten Nyquist-Zone NZ1. Wenn zwei Frequenzen als Abtastsignal mit Δ > 0 erfasst werden, handelt es ich um ein Empfangssignal in der zweiten Nyquist-Zone NZ2. Wenn zwei Frequenzen als Abtastsignal mit Δ < 0 erfasst werden, handelt es ich um ein Empfangssignal in der dritten Nyquist-Zone NZ3. Da die Abtastwerte zu den einzelnen Abtastfrequenzen separate gespeichert werden können, ist auch die Zuordnung der Abtastsignale zu den Abtastfrequenzen kein Problem.

Wie aus der Fig. 3 ersichtlich, ist diese Zuordnung auch anwendbar für den Frequenzbereich zwischen Fs1 und Fs2 bzw. zwischen Fs1/1 und Fs2/2. Dort ist nur das Δ betragsmäßig entsprechend kleiner.

Gemäß Ausführungsbeispiele können die Signale auch filtert werden. Zum Beispiel kann Hochpassfilter 410 genutzt werden, um Signale für mehrere Nyquist-Zonen zu empfangen. Das Antennenarray 100 kann dementsprechend im ersten Modus M1 betreiben werden. Der erste Hochpassfilter 410 kann beispielsweise alle Signale herauszufiltern, die unterhalb einer Frequenzuntergrenze Fu liegen, die beispielhaft 300 MHz ist.

Es kann auch ein Bandpassfilter 420 genutzt werden, um nur Signale aus der ersten Nyquist-Zone NZ1 in dem Antennenarray 100 zu nutzen, um so das Antennenarray 100 in dem zweiten Modus M2 zu betreiben. Die beiden Modi M1, M2 können auch gemischt werden (z.B. unter Nutzung verschiedener Subaperturen in verschiedenen Zeilen). Für diese Situation kann das Bandpassfilter 420 genutzt werden, um die Signale für den zweiten Modus M2 als ein Frequenzband in der ersten Nyquist-Zone bereitzustellen. Ein dritter Hochpassfilter 430 kann dann verwendet werden, der nur Signale oberhalb des Frequenzbandes durchlässt, wobei das Frequenzband nicht die gesamte erste Nyquist-Zone abdeckt, sodass der dritte Hochpassfilter 430 auch Signal aus der ersten Nyquist-Zone durchlässt. Unter Nutzung dieses Hochpassfilters 430 können Empfangssignale für den zweiten Modus M2 herausgefiltert werden.

Vorteilhafterweise können Ausführungsbeispiele den sogenannten AESA-Aufbau (Active Electronically Scanned Array-Antenna) nutzen, wo analoge Kombinierer jeweils Signale von vier Antennenelemente 111 (z.B. in einer Spalte der Subaperturen aus der Fig. 2 oder Fig. 3) kombinieren und ein breitbandiges Strahlerarray mit breitbandiger Digitalisierung bereitstellen. Außerdem ermöglichen die gewichteten Summen der verschiedenen Kanäle eine Strahlformung und eine Strahlschwenkung im Azimut. Für die Peilung können, wie erwähnt, drei Peilverfahren genutzt werden: ein Amplitudenmonopulsverfahren zur Azimutabdeckung mit einem hohen Antennengewinn, eine interferometrische Peilung zur Elevationspeilung und ein Vier-Quadranten-Monopuls-Verfahren bei einem fokussierten Antennenarray.

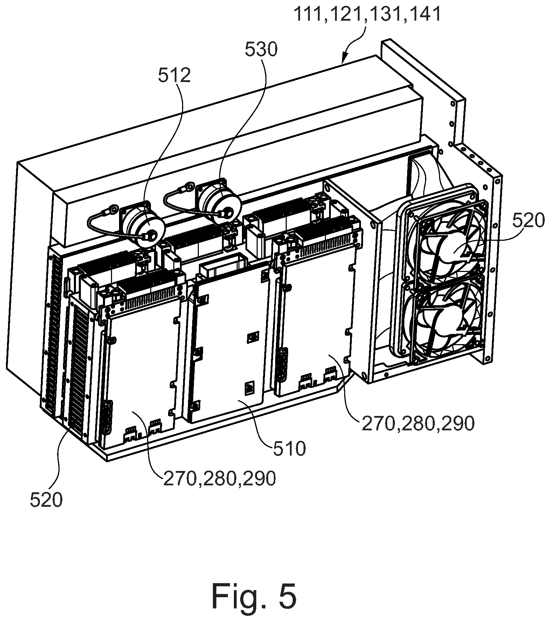

Fig. 5 zeigt beispielhaft eine Raumansicht auf die Antennenanordnung 100 mit den Antennenelementen 111, 121, 131, 141 aller Aperturen 110, 120, ... auf einer Vorderseite. Dahinter befindet sich eine analoge Elektronik mit den Eingangsschaltungen 260 für die erste Signalaufbereitung. Dahinter sind die Analog-Digital-Wandler 270, der Speicher 280 und die Strahlformungseinheiten 290 ausgebildet. Außerdem ist eine Stromversorgung 510 mit einer Stromanschluss 512 und eine digitalen Ausgang 530 zur Bereitstellung von Ausgangssignalen vorhanden. Die Antennenanordnung 100 umfasst weiter eine Luftkühlung 520, die Kühlluft über Lufteinlässe entlang der elektronischen Komponenten mittels eines Gebläses bläst.

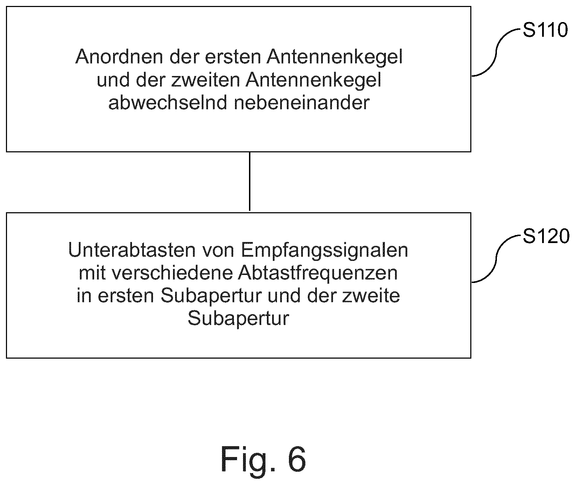

Fig. 6 zeigt ein schematisches Flussdiagramm für ein Verfahren zum Ansteuern eines Antennenarrays wie es zuvor beschrieben wurde. Das Verfahren umfasst:

- Anordnen S110 der ersten Antennenkegel und der zweiten Antennenkegel abwechselnd nebeneinander; und
- Abtasten S120 von Empfangssignalen mit verschiedene Abtastfrequenzen in ersten Subapertur 110 und der zweite Subapertur 120, wobei jeweils eine Unterabtastung durchgeführt wird.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuervorrichtung 50 (mit einem Prozessor) gespeichert sein können, die, wenn sie gelesen und durch die Steuervorrichtung 50 ausgeführt werden, die Steuervorrichtung 50 dazu veranlassen, Funktionen, Funktionalitäten und Operationen auszuführen, die zum Ausführen eines Verfahrens gemäß der vorliegenden Erfindung notwendig sind.

Es versteht sich, dass alle zuvor beschriebenen Funktionen des Antennenarrays 100 bzw. der Steuervorrichtung 50 als weitere optionale Verfahrensschritte ausgebildet sein können. Außerdem versteht es sich, dass die Reihenfolge der Nennung nicht notwendigerweise eine Reihenfolge bei der Ausführung der Verfahrensschritte bedeutet. Die Schritte können auch in einer anderen Reihenfolge ausgeführt werden bzw. es wird nur ein Teil der Verfahrensschritte ausgeführt

Vorteilhafte Aspekte von Ausführungsbeispielen können wie folgt zusammengefasst werden:

- Empfangssignale werden zunächst analog / digital gewandelt und Linearkombinationen gebildet, wobei die Bildung der Linearkombinationen zur selben Zeit für mehrere Antennenkegel erfolgt. Hierdurch werden Beschränkungen, wie sie für eine analoge Strahlformung bestehen, zumindest teilweise aufgehoben bzw. umgangen.
- Ausführungsbeispiele können die Richtwirkung der Antenne beispielsweise dynamisch ändern bzw. zwischen einer starken und schwachen Richtwirkung umschalten.
- Für die Peilverfahren können beispielsweise Monopulsverfahren oder auch interferometrische Verfahren genutzt werden.
- Der Dynamikbereich wird auf der digitalen Seite durch eine Summation erhöht.
- Eine zu nutzende Bandbreite kann an zu beobachtende Signale flexibel angepasst werden (z.B. über mehrere Nyquist-Zonen hinweg).
- Schließlich umfassen Ausführungsbeispiele keine drehenden Teile, die Probleme beispielsweise hinsichtlich einer Vereisung, einer Wartung, Sicherheit und Ausfallwahrscheinlichkeit aufweisen, was bei Ausführungsbeispielen nicht der Fall ist.
- Außerdem bieten Ausführungsbeispiele den Vorteil, dass bei der digitalen Strahlformung je nach Frequenz bzw. Strahlbreite die Anzahl und die Richtung der Antennenkegel (Beams) angepasst werden kann.
- Die Funktionen können über eine implementierbare Firmware bereitgestellt werden. Die entsprechende Elektronik umfasst beispielsweise einen hochintegrierten Chip mit 8 bis 16 Analog-Digital-Wandler bis zu einer Maximalfrequenz von 6 GHz.
- Insgesamt bieten Ausführungsbeispiele somit den Vorteil, dass die Aufklärungsleistung - im Sinne einer schnellen und empfindlichen Erfassung von Objekten - deutlich gegenüber konventionellen Antennenanlagen gesteigert wird.

Die in der Beschreibung, den Ansprüchen und den Figuren offenbarten Merkmale der Erfindung können sowohl einzeln als auch in beliebiger Kombination für die Verwirklichung der Erfindung wesentlich sein.

BEZUGSZEICHENLISTE

| | |
|---|---|
| 50 | Steuervorrichtung |
| 100 | Antennenarray |
| 110,120,130,140 | Subaperturen |
| 111,121,131,141 | Antennenelementen |
| 150 | Randantennenelemente |
| 210,220,230,240 | Antennenkegel |
| 260 | Eingangsschaltungen (front end) |
| 270 | Analog-Digital-Wandler |
| 280 | Speicher |
| 290 | Strahlformungseinheit |
| 295 | Addierer |
| 410,430 | Hochpassfilter |
| 420 | Bandpassfilter |
| 510 | Stromversorgung |
| 512 | Stromanschluss |
| 520 | Kühlung |
| 530 | digitaler Ausgang |
| 710 | drehende Antenne |
| 720 | Interferometer |
| 730 | Vier-Quadranten-Monopuls-Antenne |
| Wi | Gewichte zur Strahlformung |
| Fs1,Fs2 | (verschiedene) Abtastfrequenzen |
| f1,f2,f3 | Empfangssignale |
| F1,F2a,F2b,F3a,F3b | Abtastfrequenz |

**Patentansprüche**

1. Steuervorrichtung (50) für eine digitale Strahlformung eines Antennenarrays (100), das Antennenarray (100) umfasst zumindest eine erste Subapertur (110) zum Erzeugen einer Vielzahl von ersten Antennenkegeln (210) und eine zweite Subapertur (120) zum Erzeugen einer Vielzahl von zweiten Antennenkegeln (220),

die Steuervorrichtung ist ausgebildet, um die ersten Antennenkegel (210) und die zweiten Antennenkegel (220) abwechselnd nebeneinander anzuordnen, wobei die erste Subapertur (110) und die zweite Subapertur (120) ausgebildet sind, um verschiedene Abtastfrequenzen (Fs1, Fs2) zu nutzen und jeweils eine Unterabtastung durchzuführen.

2. Steuervorrichtung (50) nach Anspruch 1, wobei die Unterabtastung sich auf drei Nyquist-Zonen erstreckt und die Steuervorrichtung ausgebildet ist, um abgetastete Empfangssignale basierend auf einer Frequenzdifferenz von Abtastfrequenzen (F2a, F2b; F3a,F3b) eines Empfangssignals, das mit den verschiedenen Abtastfrequenzen abgetastet wurde, eindeutig den drei Nyquist-Zonen zu zuordnen und für jedes abgetastete Empfangssignal eine Vielzahl von Antennenkegel (210, 220), die zu den drei Nyquist-Zonen gehören, zu berechnen.

3. Steuervorrichtung (50) nach Anspruch 1 oder Anspruch 2, die weiter ausgebildet ist, um

die ersten Antennenkegel (210) und die zweiten Antennenkegel (220) zu überlappen; und/oder
die ersten Antennenkegel (210) und die zweiten Antennenkegel (220) nebeneinander anzuordnen und in der ersten Subapertur (110) und der zweiten Subapertur (120) jeweils eine Überabtastung durchzuführen.

4. Steuervorrichtung (50) nach Anspruch 3, wobei zumindest einige Antennenkegel (210, 220) eine gleiche Blickrichtung aufweisen und eine kohärente Addition von dazugehörigen Antennensignale erfolgt.

5. Steuervorrichtung (50) nach einem der Ansprüche 1 bis 4, wobei das Antennenarray (100) eine Vielzahl von Subaperturen (110, 120, 130, 140) aufweist, die entlang von Zeilen und Spalten angeordnet sind, wobei die erste Subapertur (110) und die zweite Subapertur (120) benachbart entlang einer Zeile oder einer Spalte angeordnet sind.

6. Steuervorrichtung (50) nach Anspruch 5,

wobei alle Antennenkegel (210, 220) aller Subaperturen (110, 120) überlappen, und/oder
wobei alle Antennenkegel (210, 220) in zumindest einer Zeile oder zumindest einer Spalte nebeneinander angeordnet sind, um mehrere übereinanderliegende Fächer zu bilden.

7. Steuervorrichtung (50) nach einem der Ansprüche 1 bis 6, wobei die Steuervorrichtung (50) weiter ausgebildet ist, um eine Peilung basierend auf zumindest einem der folgenden Verfahren durchzuführen:

- ein Phasenmonopulsverfahren,
- ein Amplituden-Monopulsverfahren,
- eine Interferometrie,
- ein 4-Quadranten-Monopulsverfahren.

8. Steuervorrichtung (50) nach einem der Ansprüche 1 bis 7, die weiter ausgebildet ist, um mit jeder Subapertur (110, 120) jeweils einen Antennenkegel (210, 220) konstant auf jeweils ein Beobachtungsobjekt zu richten.

9. Steuervorrichtung (50) nach einem der Ansprüche 1 bis 8, wobei das Antennenarray in einem Frequenzbereich von 200 MHz bis 9 GHz oder von 350 MHz bis 6 GHz betreibbar ist und die verschiedenen Abtastfrequenzen eine Differenz im Bereich von 150 MHz bis 5.000 MHz oder 250 MHz oder 4.750 MHz aufweisen.

10. Antennenarray (100) mit digitaler Strahlformung umfassend:

mehrere benachbarte Subaperturen (110, 120), die jeweils eine Vielzahl von Antennenelementen (111, 121) umfassen, wobei jede Subapertur (110, 120) ausgebildet ist, um eine Vielzahl von Antennenkegeln (210, 220) zu erzeugen; und
eine Steuervorrichtung (50) nach einem der Ansprüche 1 bis 9.

11. Antennenarray (100) nach Anspruch 10, wobei alle benachbarten Antennenelemente (111, 121) einen vorbestimmten Abstand aufweisen.

12. Verfahren zum Ansteuern eines Antennenarrays (100) nach Anspruch 10 oder Anspruch 11, das Verfahren umfasst:

Anordnen (S110) der ersten Antennenkegel (210) und der zweiten Antennenkegel (220) abwechselnd nebeneinander; und

Abtasten (S120) von Empfangssignalen mit verschiedene Abtastfrequenzen (Fs1, Fs2) in ersten Subapertur (110) und der zweite Subapertur (120), wobei jeweils eine Unterabtastung durchgeführt wird.

13. Verfahren nach Anspruch 12, wobei das Verfahren außerdem ein Auswählen eines der folgenden Modi durch ein dementsprechendes Ansteuern des Antennenarrays umfasst:

einem zweiten Modus (M2), wo die ersten Antennenkegel (210) und die zweiten Antennenkegel (220) nebeneinander angeordnet werden, wobei die erste Subapertur (110) und die zweite Subapertur (120) jeweils eine Überabtastung durchführen;
einen dritten Modus (M3), wo die ersten Antennenkegel (210) und die zweiten Antennenkegel (220) überlappend angeordnet werden;

14. Computerlesbares Speichermedium mit darauf gespeicherten Anweisungen, die ausgebildet sind, um das Verfahren nach Anspruch 12 oder Anspruch 13 auszuführen, wenn die Anweisungen auf einer Datenverarbeitungseinheit ausgeführt werden.

Fig. 1

Fig. 2

Fig. 3

Fig. 4

EP 4 703 755 A1

111,121,131,141

530

512

520

270,280,290

510

270,280,290

520

Fig. 5

Anordnen der ersten Antennenkegel
und der zweiten Antennenkegel
abwechselnd nebeneinander

S110

Unterabtasten von Empfangssignalen
mit verschiedene Abtastfrequenzen
in ersten Subapertur und der zweite
Subapertur

S120

Fig. 6

Fig. 7

Europäisches
Patentamt

European
Patent Office

Office européen
des brevets

**EUROPÄISCHER RECHERCHENBERICHT**

Nummer der Anmeldung

**EP 25 19 6831**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/083816 A1 (BOLSTAD ANDREW K [US] ET AL) 22. März 2018 (2018-03-22) * Absatz [0081] - Absatz [0086]; Abbildungen 8,9 * * Absatz [0036] * * Absatz [0067] * * Absatz [0118] * ----- | 1-14 | INV. G01S3/36 G01S3/74 H01Q21/06 H01Q25/00 H04B7/08 ADD. G01S7/02 |
| A | US 2017/336450 A1 (CORNIC PASCAL [FR] ET AL) 23. November 2017 (2017-11-23) * Absatz [0032]; Abbildung 3 * * Absatz [0100] - Absatz [0104]; Abbildungen 8,9 * ----- | 1-14 | |
| A | WO 97/20229 A1 (BOSCH GMBH ROBERT [DE]; WAGNER KLAUS PETER [DE] ET AL.) 5. Juni 1997 (1997-06-05) * Seite 2, Zeile 12 - Zeile 24 * ----- | 7 | |

RECHERCHIERTE SACHGEBIETE (IPC)

G01S
H01Q
H04B

Der vorliegende Recherchenbericht wurde für alle Patentansprüche erstellt

| Recherchenort | Abschlußdatum der Recherche | Prüfer |
|---|---|---|
| München | 8. Januar 2026 | Kaleve, Abraham |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
Dokument

EPO FORM 1503 03.82 (P04C03)

**EP 4 703 755 A1**

## ANHANG ZUM EUROPÄISCHEN RECHERCHENBERICHT
## ÜBER DIE EUROPÄISCHE PATENTANMELDUNG NR.

EP 25 19 6831

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2026

| Im Recherchenbericht angeführtes Patentdokument | Datum der Veröffentlichung | Mitglied(er) der Patentfamilie | Datum der Veröffentlichung |
|---|---|---|---|
| US 2018083816 A1 | 22-03-2018 | US 2018083816 A1 | 22-03-2018 |
| | | WO 2016186998 A1 | 24-11-2016 |
| US 2017336450 A1 | 23-11-2017 | EP 3218738 A1 | 20-09-2017 |
| | | FR 3028320 A1 | 13-05-2016 |
| | | US 2017336450 A1 | 23-11-2017 |
| | | WO 2016074841 A1 | 19-05-2016 |
| WO 9720229 A1 | 05-06-1997 | DE 19543813 A1 | 28-05-1997 |
| | | EP 0805990 A1 | 12-11-1997 |
| | | JP 3634378 B2 | 30-03-2005 |
| | | JP H10513570 A | 22-12-1998 |
| | | KR 19980701421 A | 15-05-1998 |
| | | US 5966092 A | 12-10-1999 |
| | | WO 9720229 A1 | 05-06-1997 |

EPO FORM P0461

Für nähere Einzelheiten zu diesem Anhang : siehe Amtsblatt des Europäischen Patentamts, Nr.12/82